# EUROPEAN PATENT APPLICATION

(11) **EP 3 284 773 A1**
(43) Date of publication of application: **21.02.2018**
(21) Application number: 16184236.4
(22) Date of filing: 15.08.2016
(51) Int. Cl.: C08J 3/20, C08J 11/04, C08J 11/10, C08G 18/00

(54) **A PROCESS METHOD FOR PREPARATION OF BIO-RENEWABLE, BIODEGRADABLE, BIOCOMPOSTABLE AND BIODIGESTIBLE AGRICULTURAL VEGETAL WASTE-PEPTIDE-POLYOLEFIN POLYMER COMPOSITE**

(71) Applicant: Aaron & Roman Ltd., Hitchin Herts SG5 4AQ (GB)
(72) Inventor: Ammanamanchi, Radhakrishna, 440016 NAGPUR (IN); Bharj, Narinder, Hitchin, Herts, SG5 4AQ (GB)
(74) Representative: Wittmann, Günther

(57) **Abstract**

A method for preparation of bio-renewable, biodegradable, biocompostable and biodigestible agricultural vegetal waste-peptide-polyolefin polymer composite includes the following step: mixing at least one type of peptide, and/or at least one type of protein and enzyme and a composting agent and an additive to form a mixture, forming peptide-polyolefin polymer pellets through plasticization and combination with at least one type of polyolefin polymer, adding fine powder of ground dried renewable agricultural vegetal waste powder and a plastic assisting agent, and compounding and extruding with a twin-screw type extruder or a kneader mixer for forming pellet to obtain bio-renewable, biodegradable, biocompostable and biodigestible agricultural vegetal waste-peptide-polyolefin polymer pellets.

## Description

### BACKGROUND OF THE INVENTION

### 1. Field of the Invention

The present invention relates to a method for preparation of bio-renewable, biodegradable, biocompostable and biodigestible agricultural peptide-polyolefin polymer composite.

### 2. The Related Arts

Petroleum based synthetic polymers/plastics have excellent physical properties and is lightweight and low cost and may overcome various problems and limitations of natural materials. However, if not properly recycled, combusted, or dumped in landfills, or if being improperly disposed of in the natural environment, the used synthetic polymers/plastics would last for decades without being decomposed in the natural environment. This cause serious environment pollution issues. In addition, the oil crisis signifies the issues of over-consumption of energy. Many countries around the world have focused effort in studying solutions for reduction of plastics usage for elimination of plastics pollution, and contamination of soil and water caused by various types of petroleum based plastic materials.

The growth of world population leads to an even worsening food problem. Mass cultivation of agricultural plants generates an astonishing amount of agricultural vegetal waste. The agricultural vegetal waste, if being disposed of directly without proper treatment or if being processed through improper processes such as burning, would cause serious pollution to both air and water resources. Thus, it is an important object for the entire world to develop renewable utilization of agricultural vegetal waste. For example, proper processing of the agricultural vegetal waste could provide materials for fertilizers, fuels, fillers for construction materials, and industrial materials. Some of the agricultural vegetal waste can be mixed and combined with plastics to make agricultural vegetal waste plastic composites. The natural agricultural vegetal waste may have a content of 10%-90% of the composite materials and may be used to substitute pure petroleum based plastic materials for production of plastic-like articles. This helps to reduce reliance on the petroleum-based plastics and also offers an effective way of recycling and using the resources of agricultural vegetal waste for the eventual object of sustainable agriculture. Applications of this type of products are quite wide and they show advantages regarding environment friendliness, light weight, low cost, and richness of raw material supply. However, the objective of agricultural vegetal waste composite described plastic materials and techniques for combining the agricultural vegetal waste, helps to reduce the use of petroleum-based plastics, still involve parts of plastics, which are not biodegradable, biocompostable and biodigestible at the end of life, as the product returns to the nature, but is not completely biodegradable and eventually, the issue of contamination and pollution of the living environment caused by plastics cannot be avoided.

Prior art patent documents are known, such as Chinese Patent Publication No. CN105315416A, which discloses a renewable bio-based vinyl ester resin and a manufacturing method thereof, in which a method for manufacturing a renewable bio-based vinyl ester resin using a large amount of petroleum-based plastics and tin or zinc based metal catalyst. In paragraphs [0029]-[0033] of the disclosure of the patent publication, compound 1 to compound 10, which contain petroleum-based compounds, listed in table 1 of the disclosure of the patent publication and tin or zinc contained catalysts that are highly environment polluting materials are described and selected. The materials that contain the petroleum-based compounds makes the degradation rate and degradation performance poor, such as the curves about the days needed for the degradation shown in FIG. 2 of the patent publication. The renewable bio-based vinyl ester resin disclosed in the patent publication reaches a degradation rate of only 7.6% after 80 days. A remarkable amount of time would be required for complete degradation. This makes it adverse for industrial use. In addition, the patent publication cannot be combined with agricultural vegetal waste and cannot be used to solve the issue of environment pollution caused by disposition or processing of the agricultural vegetal waste.

PCT patent publication WO2006074815 and US Patent No. 8,003,731 disclose a biodegradable degradable polyester mixtures, which teaches using a complicated petroleum-based compound as a primary material to form a polyester mixture. An application product of the polyester mixture cannot be completely bio-degraded and the degradation rate is greatly affected by the composition thereof so as to cause an issue of environment pollution resulting from the petroleum-based materials. In addition, the said patents does not allow for the combination with agricultural vegetal waste and cannot be used to solve the issue of environment pollution caused by disposition or processing of the agricultural vegetal waste.

US Patent No. 8,382,888 and European Patent No. EP1951056 disclose "composition for use in edible biodegradable articles and method of use", which teaches a technique for manufacturing a composition for making an edible biodegradable container that comprises water, pregelatinized and native starch, a first protein or natural polymeric compound, natural fibers, a wax emulsion, a mold release agent, a flavoring agent, and a coloring agent. This container, however, suffers insufficiency of hardness, rigidity, and thermo plasticity and contains a mold release agent that can only be used in making food containers, such as bowls, dishes, and cups, for pets so that the application thereof is greatly constrained. Further, natural starch and natural fiber involved in such a patent product are obtained from vegetal materials, such as fresh edible corn, potato, tapioca, rice, and wheat and fiber plants such as grasses and reeds. This makes it not possible to solve the issue of environment pollution caused by disposition or processing of the agricultural vegetal waste and would consume a lot of edible and non-edible plant resources, making it not meeting the trend of green environment protection for recycling and reuse of plastic waste.

Further, the PEP LICENSING LIMITED has previously disclosed through an European patent application No.EP15191595.6 describing "a biodegradable biocompostable biodigestible plastic" with EPO, which disclose addition of at least one type of peptide, at least one type of enzyme, at least one type of protein, a composting agent, and additives, which are used, in the form of an additive, to combine with a polyolefin polymer to form peplene. The plastic material so manufactured is biodegradable, biocompostable, biodigestible and shows advantages of recyclability, environmental friendly and having no damage physical to property of the material.

### SUMMARY OF THE INVENTION

The present invention provides a method for the preparation of a polymer composite consisting of bio-renewable plasticized agricultural vegetal waste and peptide-polyolefin polymer having improved bio-renewable, biodegradable, biocompostable and biodigestible which can be further combined with a bio-renewable agricultural vegetal waste, further subjecting to plasticization and combination to form a biomass peptide polymer composite containing biomass base material, and also showing the physical property of petroleum-based plastics and bio-renewable sustainability for sustainable recyclable, and has excellent biodegradability, biocomposability and biodigestability properties to overcome the drawbacks of the petroleum-based materials of the prior art and referred herein patent documents, that they cannot be combined with natural agricultural vegetal waste for reuse to solve the issues of environment pollution resulting from disposition or processing of the agricultural vegetal waste.

Thus, the present invention discloses a method for preparation of bio-renewable, biodegradable, biocompostable and biodigestible based on the agricultural vegetal waste-peptide-plastic composites, which comprises:
(A) mixing materials, in which materials including at least one or more type of peptide, and further at least one type of protein and enzyme, and a composting agent, and an additive further mixed to form a process able mixture;
(B) forming peptide-polyolefin polymer pellets, in which the mixture of Step (A) and at least one type of polyolefin polymer are subjected to plasticization and combination to form peptide-polyolefin polymer pellets;
(C) adding agricultural vegetal waste and a plastic assisting agent, in which the peptide-polyolefin polymer pellets of Step (B) are added with renewable agricultural vegetal waste powder, which comprises at least one type of agricultural vegetal waste raw material dried and ground to have a form of powder and a plastic assisting agent; and
(D) extruding for shaping pellet product, in which the mixed material of peptide-polyolefin polymer pellets of Step (C) that is added with the renewable agricultural vegetal waste powder and the plastic assisting agent is subjected to compounding and extruding for forming pellet to thereby provide a bio-renewable, biodegradable, biocompostable and biodigestible agricultural vegetal waste-peptide-polyolefin polymer composite pellet product.

Further, in the above-described method for preparation of bio-renewable, biodegradable, biocompostable and biodigestible plastic composites according to the present invention, the mixture of Step (A) comprises one of polyethylene, which can be at least one of linear low density polyethylene (LLDPE), high density polyethylene (HDPE), low density polyethylene (LDPE) medium density polyethylene, and/or ethylene vinyl acetate (EVA) and ethylene butyl acrylate (EBA) and any combination thereof.

In the above-described method for preparation of bio-renewable, biodegradable, biocompostable and biodigestible plastics according to the present invention, the polyolefin polymer of Step (B) comprises one of polyolefin polymers, polyethylene, polypropylene, polyethylene terephthalate, and/or polystyrene, polyamide, polyurethane, ethylene vinyl acetate, and ethylene butyl acrylate or a combination thereof.

In the above-described method for preparation of bio-renewable, biodegradable, biocompostable and biodigestible plastics according to the present invention, mixture ratios of the peptide-polyolefin polymer pellets and the renewable agricultural vegetal waste powder and the plastic assisting agent in Step (C) are respectively 10%-20%, 75%-88%, and 2%-5% of total mass.

In the above-described method for preparation of bio-renewable, biodegradable, biocompostable and biodigestible plastics according to the present invention, mixture ratios of the peptide-polyolefin polymer pellets and the renewable agricultural vegetal waste powder and the plastic assisting agent in Step (C) are respectively 45%-68%, 30%-50%, and 2%-5% of total mass.

In the above-described method for preparation of bio-renewable, biodegradable, biocompostable and biodigestible plastics according to the present invention, mixture ratios of the peptide-polyolefin polymer pellets and the renewable agricultural vegetal waste powder and the plastic assisting agent in Step (C) are respectively 10%-90%, 5%-88%, and 2%-5% of total mass.

In the above-described method for preparation of bio-renewable, biodegradable, biocompostable and biodigestible plastics according to the present invention, the agricultural vegetal waste powder of Step (C) comprises powdery objects having a particle size of 10um-100um.

In the above-described method for preparation of bio-renewable, biodegradable, biocompostable and biodigestible plastics according to the present invention, the agricultural vegetal waste row material of Step (C) is selected from one or more types of agricultural vegetal waste including sugar cane bagasse, coffee grounds, bamboo fiber, fruit shells including coconut fiber, corn stalks and corn cobs, rice/wheat bran or husk.

In the above-described method for preparation of bio-renewable, biodegradable, biocompostable and biodigestible plastics according to the present invention, the plastic assisting agent of Step (C) one or more of a series of aromatic compounds, including p-methoxy benzyl alcohol, benzene dimethanol, cinnamyl alcohol, and some related carboxylic acids, including cinnamic acid, coumaric acid, succinic acid, malic acid and ferulic acid, together with zinc stearate.

Further, in the above-described method for preparation of bio-renewable, biodegradable, biocompostable and biodigestible plastics according to the present invention, compounding and extruding for forming pellet conducted in Step (D) is performed under a temperature condition where the temperature is 90-200°C.

In the above-described method for preparation of bio-renewable, biodegradable, biocompostable and biodigestible plastics according to the present invention, compounding and extruding for forming pellet conducted in Step (D) is performed with a twin-screw type extruder or a kneader mixer.

An efficacy of the method for preparation of bio-renewable, biodegradable, biocompostable and biodigestible plastics according to the present invention is to provide a bio-renewable, biodegradable, biocompostable and biodigestible polymer product, which adds a bio-renewable, biodegradable, biocompostable and biodigestible additive during the processing of polyolefin polymer so as to provide an effect of bio-renewable, biodegradable, biocompostable and biodigestible in order to provide a novel advantage for replacement of regular petroleum plastics usage reduction. Thus, a plastic formula is developed for combination with natural peptide, enzyme and protein originating from edible sources, together with a renewable raw material originating from natural agricultural vegetal waste to form a bio-renewable, biodegradable, biocompostable and biodigestible polyolefin polymer pellet, such as bio-renewable, biodegradable , biocompostable and biodigestible polyolefin polymer pellets containing polyethylene, polypropylene, polyethylene terephthalate, and/or polystyrene, polyamide, polyurethane, ethylene vinyl acetate, and ethylene butyl acrylate polyethylene or other different grades to achieve reduction of consumption of fossil resources and pollution and effective use of regenerated or disposed agricultural vegetal material for reduction of cost and providing an application product made with such material as bio-renewable, biodegradable, biocompostable and biodigestible polyolefin polymer pellets with a biodegradable, biocompostable and biodigestible function.

Further, the method for preparation of bio-renewable, biodegradable, biocompostable and biodigestible plastic composites according to the present invention helps to reduce environment pollution caused by disposal of un-degradable plastics and allows for collection and reuse of agricultural waste to achieve bio-renewability and sustainability.

The present invention provides a method for preparation of bio-renewable, biodegradable, biocompostable and biodigestible plastic composites by adding bio-renewable agricultural vegetal waste materials. Since the agricultural vegetal waste materials replace a part of the petroleum-based plastics, a high cost effect can be obtained and further, the agricultural waste materials themselves can provide biodegradable, biocompostable and biodigestible.

The present invention provides a method for preparation of bio-renewable, biodegradable, biocompostable and biodigestible plastics composite. A plastic composite product so manufactured can take place by regularly used polyolefin plastics, including polyethylene and polypropylene, to make a bio-renewable, biodegradable, biocompostable and biodigestible polyolefin polymer composite pellet product, which may be, in subsequent application, subjected to film blowing, sheet extruding, or injection molding to make various diverse products including agricultural mulch films, agricultural fruit covers and packaging, seedling trays, plant pots, all types of plastic bags, polymer fiber products, plastic sheets, dinning utensils, furniture, construction materials, 3D printing materials and electronic product packaging plastics. The processing temperature of application products conducted with film blowing, sheet extruding, and injection molding is relatively low, where molding or shaping can be carried-out at a temperature of 150°C-200°C, helping to improve manufacturing conditions for the various and/or wide variety of product applications.

Thus, the present invention provides a method for preparation of bio-renewable, biodegradable, biocompostable and biodigestible plastic composites, which further can be able to manufacture a bio-renewable, biodegradable, biocompostable and biodigestible polyolefin polymer composite pellets through a bio-renewable, biodegradable, biocompostable and biodigestible method by a suitable known art in the industry to chemically bonding the peptide-polyolefin polymer pellets, agricultural vegetal waste materials, and the plastic manufacturing assisting agent, such that the particle size is consistent, the state is stable for further processing and it does not require modification of existing plastic manufacturing facility.

Further, the present invention provides a bio-renewable, biodegradable, biocompostable and biodigestible polyolefin polymer pellet manufactured with a method for preparation of bio-renewable, biodegradable, biocompostable and biodigestible plastic articles, in which the particle size of the pellets is consistent and can be applied to processing operations, such as film blowing, sheet extruding, and injection molding to form an application bio-renewable, biodegradable, biocompostable and biodigestible film, sheet, or injection molded articles. The final application product exhibits texture and smell of natural agricultural waste fibrous materials and shows excellent surface properties, smoothness, structural strength and toughness, and having a 100% biodegradable, biocompostable and biodigestible function, helping to reduce the utilization of petroleum-based plastics and alleviate oil crisis and also offering a bio-renewable and detoxifying disposal solution for agricultural vegetal waste and also providing sustainability and eco-friendliness and having an effect of highly cost-effective green plastics.

### BRIEF DESCRIPTION OF THE DRAWINGS

The present invention will be apparent to those skilled in the art by reading the following description of preferred embodiments thereof, with reference to the attached drawings, wherein:
FIG.1 1 is a flow chart illustrating a method for preparation of bio-renewable, biodegradable, biocompostable and biodigestible plastic composite according to the present invention;
FIG. 2 is a picture showing environment biodegradation of a polyethylene based garbage bag product made of a bio-renewable, biodegradable, biocompostable and biodigestible polyolefin polymer pellet product of the method according to the present invention;
FIG. 3 is a picture showing environment soil biodegradation of a polyethylene based garbage bag product made of a bio-renewable, biodegradable, biocompostable and biodigestible polyolefin polymer pellet product of the method according to the present invention for 180 - 240 days;
FIG. 4A is a plot showing a percentage curve of standard model of biodegradation for a polyethylene based garbage bag product made of a bio-renewable, biodegradable, biocompostable and biodigestible polyolefin polymer pellet product of the method according to the present invention for 180 - 240 days for comparison with starch under laboratory compost condition according to ASTM D5988 biodegradation experiment;
FIG. 4B is a plot showing a percentage curve of sampling model of biodegradation for a polyethylene based garbage bag product made of a bio-renewable, biodegradable, biocompostable and biodigestible polyolefin polymer pellet product of the method according to the present invention for 180 - 240 days for comparison with starch under laboratory compost condition according to ASTM D5988 biodegradation experiment.

### DETAILED DESCRIPTION OF THE PREFERRED EMBODIMENTS

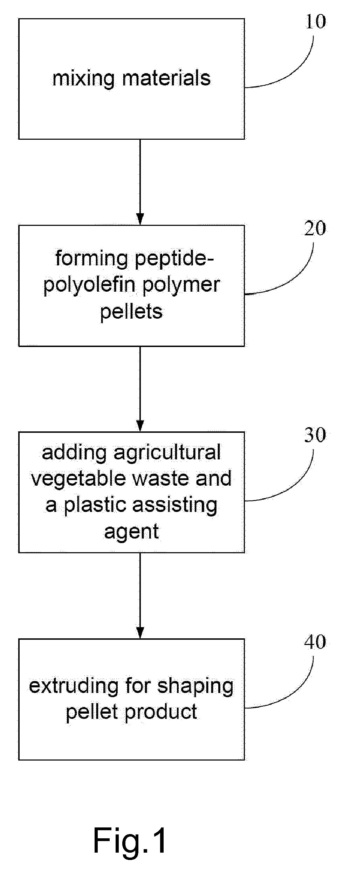

Referring to FIG. 1, the present invention provides a method for preparation of bio-renewable, biodegradable, biocompostable and biodigestible plastics, which comprises Step 10-40.
(10) mixing materials, in which materials including at least one type of peptide, at least one type of protein and enzyme, and a composting agent, and an additive are mixed to form a mixture; the mixture comprises one of polyethylene, which can be at least one of linear low density polyethylene (LLDPE), high density polyethylene (HDPE), low density polyethylene (LDPE) medium density polyethylene, ethylene vinyl acetate (EVA) and ethylene butyl acrylate (EBA) and any combination thereof;
(20) forming peptide-polyolefin polymer pellets, in which the mixture of Step 10 and at least one type of polyolefin polymer are subjected to plasticization and combination to form peptide-polyolefin polymer pellets, wherein at least one type of polyolefin polymer comprises one of polyolefin and/or other polymers, polyethylene, polypropylene, polyethylene terephthalate, and/or polystyrene, polyamide, polyurethane, ethylene vinyl acetate, and ethylene butyl acrylate or a combination thereof;
(30) adding agricultural vegetal waste and a plastic assisting agent, in which the peptide-polyolefin polymer pellets of Step 20 are added with renewable agricultural vegetal waste powder, which comprises at least one type of agricultural vegetal waste raw material dried and ground to have a form of powder and a plastic assisting agent, wherein the agricultural vegetal waste raw material is selected from one or more types of agricultural vegetal waste including sugar cane bagasse, coffee grounds, bamboo fiber, fruit shells including coconut fiber, corn stalks and corn cobs, rice/wheat bran or husk; the renewable agricultural vegetal waste powder has a particle size between l0um-100um; the plastic assisting agent comprises one or more of a series of aromatic compounds, including p-methoxy benzyl alcohol, benzene dimethanol, cinnamyl alcohol, and some related carboxylic acids, including cinnamic acid, coumaric acid and ferulic acid, together with zinc stearate; and any other agent known in the state of industrial processing art;
(40) extruding for shaping pellet product, in which the mixed material of peptide-polyolefin polymer pellets of Step 30 that is added with the renewable agricultural vegetal waste powder and the plastic assisting agent is subjected to compounding and extruding through for example a twin-screw type extruder or a kneader mixer or by any known art, for forming pellet to thereby provide a bio-renewable, biodegradable, biocompostable and biodigestible agricultural vegetal waste- peptide-polyolefin polymer composite pellet product, wherein the twin-screw type extruder or the kneader mixer has an operation temperature of 90 -200°C.

The present invention provides a method for preparation of bio-renewable, biodegradable, biocompostable and biodigestible plastics, wherein the peptide-polyolefin polymer pellets of Step 20 and the renewable agricultural vegetal waste powder of Step 30 and the plastic assisting agent may have different ratios for mixture thereof in order to provide for the application in different bio-renewable peptide-polyolefin polymer pellet products including injection-molding grade products, film blowing grade products, and sheet extrusion grade products of bio-renewable peptide-polyolefin polymer pellet product. Examples of various mixture ratio of the peptide-polyolefin polymer pellets of Step 20 and the renewable agricultural vegetal waste powder and the plastic assisting agent of Step 30 and subsequent applications thereof to injection molding grade products, film blowing grade products, and sheet extrusion grade products will be discussed as follows.

### Example 1: Injection Molding Grade Product

1. mixture ratio: peptide polyethylene or peptide polypropylene based peptide-polyolefin polymer pellets, the agricultural vegetal waste raw material, and the plastic assisting agent are mixed and respectively as 10%-20%, 75%-88%, and 2%-5% of the total mass of the mixed material.
2. molding of application product: bio-renewable, biodegradable, biocompostable and biodigestible polyolefin polymer pellet product manufactured through extrusion and particle forming of the peptide-polyolefin polymer pellets, the agricultural vegetal waste raw material, and the plastic assisting agent under such a mixture ratio is subjected to heating by having temperature rising to 150-200°C for injection molding to produce a corresponding molded product.

### Example 2: Film Blowing Grade Product

1. mixture ratio: peptide polyethylene or peptide polypropylene based peptide-polyolefin polymer pellets, the agricultural vegetal waste row material, and the plastic assisting agent are mixed and respectively as 45%-68%, 30%-50%, and 2%-5%of the total mass of the mixed material.
2. molding of application product: bio-renewable, biodegradable, biocompostable and biodigestible polyolefin polymer pellet product manufactured through extrusion and particle forming of the peptide-polyolefin polymer pellets, the agricultural vegetal waste raw material, and the plastic assisting agent under such a mixture ratio, is subjected to heating by having temperature rising to 150-200°C for film blowing to produce a corresponding plastic film product.

### Example 3: Sheet Extrusion Grade Product

1. mixture ratio: peptide polyethylene or peptide polypropylene based peptide-polyolefin polymer pellets, the agricultural vegetal waste row material, and the plastic assisting agent are mixed and respectively as 10%-90%, 5%-99%, and 2%-5%of the total mass of the mixed material.
2. molding of application product: bio-renewable, biodegradable, biocompostable and biodigestible polyolefin polymer pellet product manufactured through extrusion and particle forming of the agricultural vegetal waste-peptide-polyolefin polymer pellets, the agricultural vegetal waste raw material, and the plastic assisting agent under such a mixture ratio is subjected to heating by having temperature rising to 150-200°C for sheet extrusion to produce a corresponding plastic sheet product.

The present invention provides a bio-renewable, biodegradable, biocompostable and biodigestible polyolefin polymer pellet product produced with a method for preparation of bio-renewable, biodegradable, biocompostable and biodigestible plastics. Microorganisms can act on the mixed polyolefin material for biodegradation, biocomposting, biodigestion to eventually become biomass, water, and carbon dioxide and other volatile substances. However, the primary residues of biodegradation for a product of a subsequent application of the bio-renewable, biodegradable, biocompostable and biodigestible peptide polyethylene polymer according to the present invention are carbon dioxide and water. Other types of peptide polymers also have other biodegradation products, including gas (such as methane), ketone (such as acetone), and alcohol (such as methyl alcohol, ethyl alcohol, propyl alcohol, and butyl alcohol). Methane and ethyl alcohol are well known as regenerated energy material for recycled use. Based on this, the biodegraded product can be obtained for being used as useful energy sources.

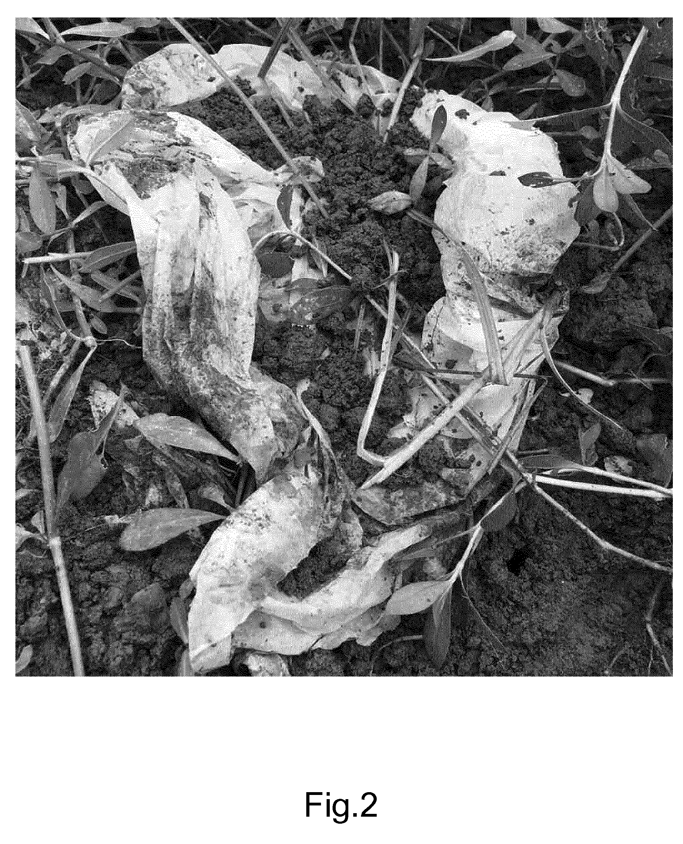

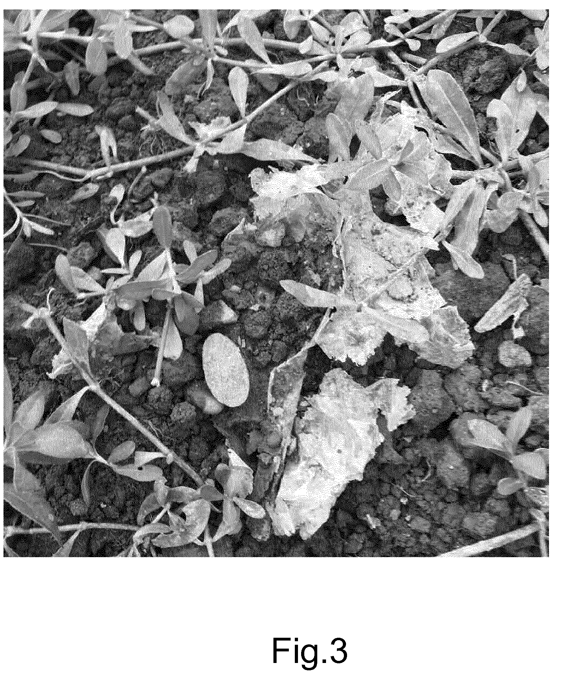

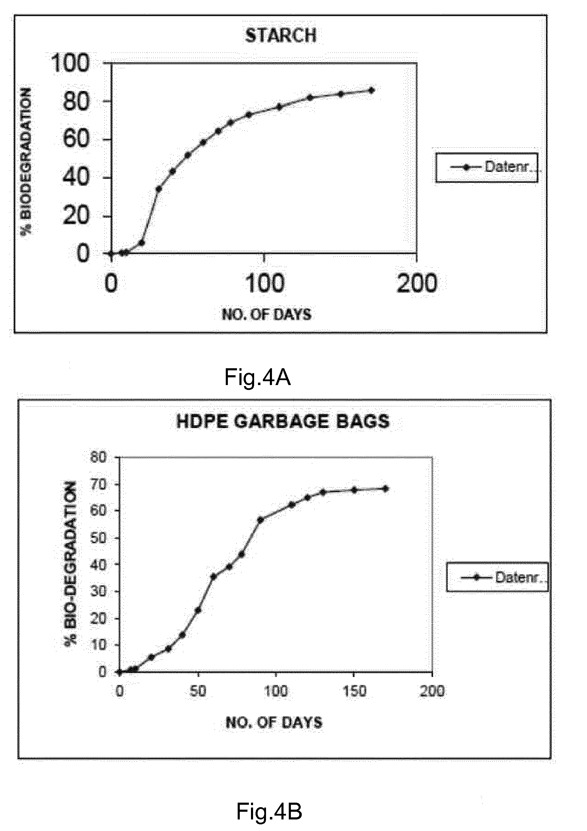

The present invention provides a bio-renewable, biodegradable, biocompostable and biodigestible polyolefin polymer pellet product produced with a method for preparation of bio-renewable, biodegradable, biocompostable and biodigestible plastics. In an application in which a bio-renewable, biodegradable, biocompostable and biodigestible agricultural vegetal waste-peptide-polyethylene is manufactured, such a product has been confirmed meeting the requirement of ASTM (American Society for Testing and Materials) D 5988, which specifies biodegradability and eco-toxicity of the films and degradation of the film affect on germination of plants. According to the test conditions specified in ASTM D 5988, pictures of film decomposition shown in FIGS. 2 and 3 and degradation rate and test result under laboratory condition are shown in FIGS. 4A and 4B where under composting conditions in laboratories, the bio-renewable, biodegradable, biocompostable and biodigestible peptide polyethylene reaches degradation rate of 68.2% within 180 - 240 days and in actual natural environments, the degradation speed is affected by environment, microorganism conditions, constituent amounts of peptide, enzyme, protein, renewable agricultural vegetal waste, and product thickness. As shown in FIGS.2,3,4A and 4B, a bio-renewable, biodegradable, biocompostable, biodigestible polyolefin polymer pellet product manufactured with the bio-renewable, biodegradable, biocompostable and biodigestible method according to the present invention is applied to a peptide polyethylene film product, and this achieved through blowing with a blowing film extruder to form a film of a thickness of 5-100 micrometers.

Thus, under aerobic conditions, the bio-renewable, biodegradable, biocompostable and biodigestible polyolefin polymer pellet product, such as an application to a product of polyethylene films, allows the poly films to be biodegradable and this is speeded up through attack by oxidation by microorganisms to eventually become bio-compost that is environmental friendly and reusable as manure.

Although the present invention has been described with reference to the preferred embodiments thereof, it is apparent to those skilled in the art that a variety of modifications and changes may be made/ effected without departing from the scope of the present invention which is intended to be defined by the appended claims.

## Claims

1. A method for preparation of bio-renewable, biodegradable, biocompostable and biodigestible agricultural vegetal waste-peptide-polyolefin polymer composite, comprising the following steps:
(A) mixing materials, in which materials including at least one type of peptide, and/or at least one type of protein and enzyme, and a composting agent, and an additive mixed to form a mixture;
(B) forming peptide-polyolefin polymer pellets, in which the mixture of Step (A) and at least one type of polyolefin and/or other type polymer are subjected to plasticization and combination to form peptide-polyolefin polymer pellets;
(C) adding agricultural vegetal waste and a plastic assisting agent, in which the peptide-polyolefin polymer pellets of Step (B) are added with renewable agricultural vegetal waste powder, which comprises at least one type of agricultural vegetal waste raw material dried and ground to have a form of powder and a plastic assisting agent; and
(D) extruding for shaping pellet product, in which the mixed material of peptide-polyolefin polymer pellets of Step (C) that is added with the renewable agricultural vegetal waste powder and the plastic assisting agent is subjected to compounding and extruding for forming pellet to thereby provide a bio-renewable, biodegradable, biocompostable and biodigestible peptide-polyolefin polymer pellet product.

2. The method for preparation of bio-renewable, biodegradable, biocompostable and biodigestible agricultural vegetal waste-peptide-polyolefin polymer as claimed in Claim **1,** wherein the polyolefin polymer of Step (B) comprises one of polyolefin polymers, polyethylene, polypropylene, polyethylene terephthalate, and/or polystyrene, polyamide, polyurethane, ethylene vinyl acetate, and ethylene butyl acrylate or a combination thereof.

3. The method for preparation of bio-renewable, biodegradable, biocompostable and biodigestible agricultural vegetal waste-peptide-polyolefin polymer as claimed in Claim **1,** wherein mixture ratios of the peptide-polyolefin polymer pellets and the renewable agricultural vegetal waste powder and the plastic assisting agent in Step (C) are respectively 10%-20%, 75%-88%, and 2%-5% of total mass.

4. The method for preparation of bio-renewable, biodegradable, biocompostable and biodigestible agricultural vegetal waste-peptide-polyolefin polymer as claimed in Claim **1,** wherein mixture ratios of the peptide-polyolefin polymer pellets and the renewable agricultural vegetal waste powder and the plastic assisting agent in Step (C) are respectively 45%-68%, 30%-50%, and 2%-5% of total mass.

5. The method for preparation of bio-renewable, biodegradable, biocompostable and biodigestible agricultural vegetal waste-peptide-polyolefin polymer as claimed in Claim **1,** wherein mixture ratios of the peptide-polyolefin polymer pellets and the renewable agricultural vegetal waste powder and the plastic assisting agent in Step (C) are respectively 10%-90%, 5%-88%, and 2%-5% of total mass.

6. The method for preparation of bio-renewable, biodegradable, biocompostable and biodigestible agricultural vegetal waste-peptide-polyolefin polymer as claimed in Claim **1,** wherein the agricultural vegetal waste powder of Step (C) comprises powdery objects having a particle size of 10um-100um.

7. The method for preparation of bio-renewable, biodegradable, biocompostable and biodigestible agricultural vegetal waste-peptide-polyolefin polymer as claimed in Claim **1,** wherein the agricultural vegetal waste row material of Step (C) is selected from one or more types of agricultural vegetal waste including sugar cane bagasse, coffee grounds, bamboo fiber, fruit shells including coconut fiber, corn stalks and corn cobs, rice/wheat bran or husk.

8. The method for preparation of bio-renewable, biodegradable, biocompostable and biodigestible agricultural vegetal waste-peptide-polyolefin polymer as claimed in Claim **1,** wherein the plastic assisting agent of Step (C) one or more of a series of aromatic compounds, including p-methoxy benzyl alcohol, benzene dimethanol, cinnamyl alcohol, and some related carboxylic acids, including cinnamic acid, coumaric acid and ferulic acid, together with zinc stearate.

9. The method for preparation of bio-renewable, biodegradable, biocompostable and biodigestible agricultural vegetal waste-peptide-polyolefin polymer as claimed in Claim **1,** wherein compounding and extruding for forming pellet conducted in Step (D) is performed under a temperature condition where the temperature is 90-200°C.

10. The method for preparation of bio-renewable, biodegradable, biocompostable and biodigestible agricultural vegetal waste-peptide-polyolefin polymer as claimed in Claim **1,** wherein compounding and extruding for forming pellet conducted in Step (D) is performed with a twin-screw type extruder or a kneader mixer.
